(19) Europäisches Patentamt

European Patent Office

Office européen des brevets

(11) EP 1 502 091 B1

(12) EUROPEAN PATENT SPECIFICATION

(45) Date of publication and mention
of the grant of the patent:
24.05.2006 Bulletin 2006/21

(51) Int Cl.:
*G01K 7/36* (2006.01)   *G01D 5/20* (2006.01)

(21) Application number: 03721241.2

(86) International application number:
PCT/SE2003/000663

(22) Date of filing: 25.04.2003

(87) International publication number:
WO 2003/095960 (20.11.2003 Gazette 2003/47)

(54) **METHOD AND DEVICE FOR MEASUREMENT OF TEMPERATURE**

VERFAHREN UND EINRICHTUNG ZUR TEMPERATURMESSUNG

PROCEDE ET DISPOSITIF DE MESURE DE TEMPERATURE

(84) Designated Contracting States:
AT BE BG CH CY CZ DE DK EE ES FI FR GB GR
HU IE IT LI LU MC NL PT RO SE SI SK TR

(30) Priority: 07.05.2002 SE 0201409

(43) Date of publication of application:
02.02.2005 Bulletin 2005/05

(73) Proprietor: VOLVO LASTVAGNAR AB
405 08 Göteborg (SE)

(72) Inventors:
• MAX, Erland
  S-426 68 Västra Frölunda (SE)

• STEEN, Marcus
  S-424 33 Angered (SE)

(74) Representative: Andersson, Per Rune et al
Albihns Göteborg AB
Box 142
401 22 Göteborg (SE)

(56) References cited:
WO-A1-00/71977          WO-A1-01/13070
US-A- 4 045 787

**Description**

TECHNICAL FIELD:

The present invention relates to a method for measurement of temperature, in accordance with the preamble of the accompanying claim 1. In particular, the invention will find its application in connection with automotive vehicles.
The invention also relates to a device intended for such measurement of temperature, in accordance with the preamble of the accompanying claim 11.

BACKGROUND ART:

In many technical contexts, there exists a requirement for devices and methods for measuring physical parameters, such as for example the temperature. In connection with vehicles, for example heavy-duty trucks, temperature sensors are utilised in connection with the vehicle gearbox, for detection of, for example, the temperature of the gear oil.
A known type of gearbox comprises a so-called splitter ratio means, a main gearbox section and a range ratio means. The splitter ratio means is located closest to the clutch and functions as a full/half step ratio means. The main gearbox section is located in the middle and functions like a conventional gearbox for e.g. a passenger car. The range ratio means, finally, is located at the rear and functions like a range gearbox. For correct operation of the gearbox, detection of a measurement of the temperature of the gear oil is required, which in that case is used in a control unit intended for the vehicle's transmission. Of course, additional temperature sensors may also be present in the vehicle.
One problem in connection with known arrangements for measurement of temperature is that a particular sensor is necessary. This results in increased costs for hardware (i.e. the actual temperature sensor) as well as for assembly of the relevant components.

DISCLOSURE OF THE INVENTION:

A primary object of the present invention is to solve the above problems and to provide an improved method for measurement of temperature, in particular in an automotive vehicle drive line. This is achieved by a method as discussed in the introduction, the characteristics of which are defined by claim 1, wherein the method according to the invention relates to a method for measurement of temperature with detector which is of the inductive type and comprises a coil and a core movable within the coil, the position of said core in relation to the coil being dependent on the position of said element, wherein the method comprises connecting a regularly alternating voltage to said coil and measuring the current flowing through the coil. The method according to the invention is characterised in that it comprises: measuring a first period of time needed for said current to change from a first predetermined level to a second predetermined level; measuring a second period of time passing from when said voltage changes polarity until said current reaches said second predetermined level; and deriving a measurement of the temperature in connection with the detector on the basis of the measurements of said first period of time and said second period of time.
The object is also achieved by a device as discussed in the introduction, the characteristics of which are defined by claim 11, wherein the device is intended for measurement of temperature with a detector which is of the inductive type and comprises a coil and a core movable within the coil, the position of said core in relation to the coil being dependent on the position of said element, wherein the device comprises: an amplifier means for connecting a regularly alternating voltage to said coil and a measuring device for measuring the current flowing through the coil. The device according to the invention is characterised in that the measuring device is intended for measuring a first period of time needed for said current to change from a first predetermined level to a second predetermined level; that the measuring device is intended for measuring a second period of time passing from when said voltage changes polarity until said current reaches said second predetermined level; and that said measuring device is intended for deriving a measurement of the temperature in connection with the detector on the basis of the measurements of said first period of time and said second period of time.
With the invention, a method and a device for measurement of temperature with high accuracy will be achieved in environments where temperatures vary strongly with time and space. Furthermore, any existing sensors in the vehicle can be excluded, which is an essential advantage as regards the invention.
A relatively high frequency of said square wave voltage can be selected, allowing a large number of measurements to be performed and a mean value of said measurements to be calculated. This secures that temporary variations, e.g. due to vibrations of the position sensor, will not influence the measurements forming the basis of the measurement of temperature according to the invention.
Advantageous embodiments are described in the subsequent, dependent claims.

**EP 1 502 091 B1**

BRIEF DESCRIPTION OF THE DRAWINGS:

The invention will be explained below in connection with preferred embodiments and the enclosed drawings, in which:

Fig. 1 illustrates, schematically and in partial cross-section, a position sensor and a control device that can be utilised according to the invention,

Fig. 2 shows a voltage and current diagram, illustrating the function of the position sensor,

Fig. 3 shows two current curves, corresponding to two different temperatures,

Fig. 4 shows two current curves, illustrating how a temperature compensation during measurements with the position sensor can be performed, and

Fig. 5 shows how the existing position sensor can be utilised during measurement of the ambient temperature.

PREFERRED EMBODIMENT:

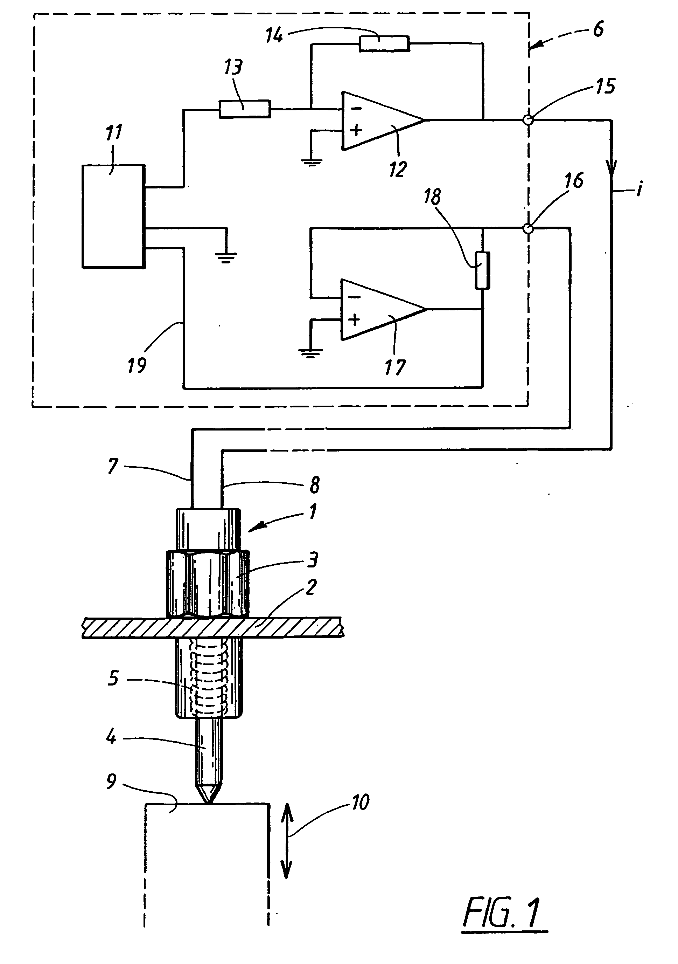

Fig. 1 shows a position sensor 1 of a type that, in accordance to what will be described below, can be utilised for a method and a device for measurement of temperature in accordance with the present invention. According to a preferred embodiment, the position sensor 1 is intended for use in connection with heavy-duty trucks, more particularly for position detection in a clutch or a gearbox of the vehicle. Consequently, the lower portion of the figure shows a side view, in partial cross-section, of a position sensor 1, arranged in a cover or casing 2, for example in such a clutch or gearbox. The position sensor 1 is arranged for attachment in a hole through the casing 2 by means of a screw 3. In this way, the position sensor 1 extends through said casing 2.

The position sensor 1, the function and construction of which is described in the Swedish patent application No. 9901876-4 (corresponds to international patent application No. PCT/SE00/00983), comprises a movable element in the form of a core 4, being arranged inside the casing 2 and movable within a coil 5 (indicated with dashed lines). The coil 5 is further connected to a separate measuring device 6, via two electrical connections 7, 8. The measuring device 6 and its function will be described in detail below. The position sensor 1 can be utilised with a system according to the circuit diagram illustrated in Fig. 1, but it is not limited to this but may be realised in other ways.

The position sensor 1 is of the inductive type, a type of sensor as such known. Further, the position sensor 1 is installed in the casing 2 in such a way that the core 4 can be mechanically influenced by an element 9, movable back and forth along the longitudinal direction of the core 4, as indicated by an arrow 10. In the applications suitable for the position sensor 1, the element 9 may in reality consist of, for example, a shaft, a piston rod or a sleeve. The position sensor 1 is however not limited to these examples, but may be applied also with other components. Preferably, the element 9 is arranged so as to allow displacement back and forth for a certain distance, which may for example lie within a range between a few millimetres and up to a few hundred millimetres. According to what was discussed initially, the inductance of the coil 5 will vary according to how far into the coil 5 the core is displaced. The position of the core 4 is in turn dependent of the position of the element 9 along the longitudinal direction of the core 4. In the following will be described how a measure of the inductance, and thereby of the position of the element 9, can be determined.

The position sensor 1 is, as was mentioned above, connected to a measuring device 6. Said device includes a computer unit 11 arranged for control and measurement in connection with position detection. To this end, the computer unit 11 is functioning to drive a first operational amplifier 12, via a resistor 13 connected to the negative input of the operational amplifier 12, causing a square wave voltage to appear at the output of the operational amplifier 12. The output of the operational amplifier 12 is hereby fed back to its negative input via a further resistor 14. The square wave voltage is output at a connection 15 and fed through the coil 5. Preferably, the square wave voltage has a frequency lying in the range between 2 Hz and 2 kHz.

According to what was explained above, the voltage across the coil 5 will cause a current $i$ that will vary with time. The current $i$ can be measured, by the coil 5 also being connected to a second connection 16 of the measuring device 6. This connection 16 is connected to a second operational amplifier 17, which, according to the embodiment, is connected as a current-voltage converter, with a resistor 18 between the output of the operational amplifier 17 and its negative input. The output of the operational amplifier 17 is further connected to an input of the computer unit 11, via an electrical connection 19. The measurement current $i$ is fed to the connection 16, and according to previously known relationships, the potential at the output of the second operational amplifier 17 will be substantially equal to the reverse sign of the current $i$, multiplied by the resistance of the resistor 18. This voltage can be detected in the computer unit 11, through which a value of the current $i$ can be determined.

One possible field of application area is to use the above-mentioned position sensor 1 in connection with gearboxes for heavy-duty trucks, more precisely during detection of the position of the gear ratios forming part of the gearbox. For example, four position sensors of the above-mentioned type may in this case be utilised in such a gearbox, although the number of course may vary.

The principle of utilising the per se known position sensor 1 for position detection will now be described in detail. An important principle of the function of the position sensor 1 is that the period of time $t_1$, needed for the current to rise from a first level $i_1$ to a second level $i_2$, is measured. This measured time period $t_1$ will provide a measure of the position of the core 4, because the inductance of the coil 5 (and thereby the time constant L/R for the change in the current i) will vary in dependence of how far into the coil 5 the core 4 has been inserted.

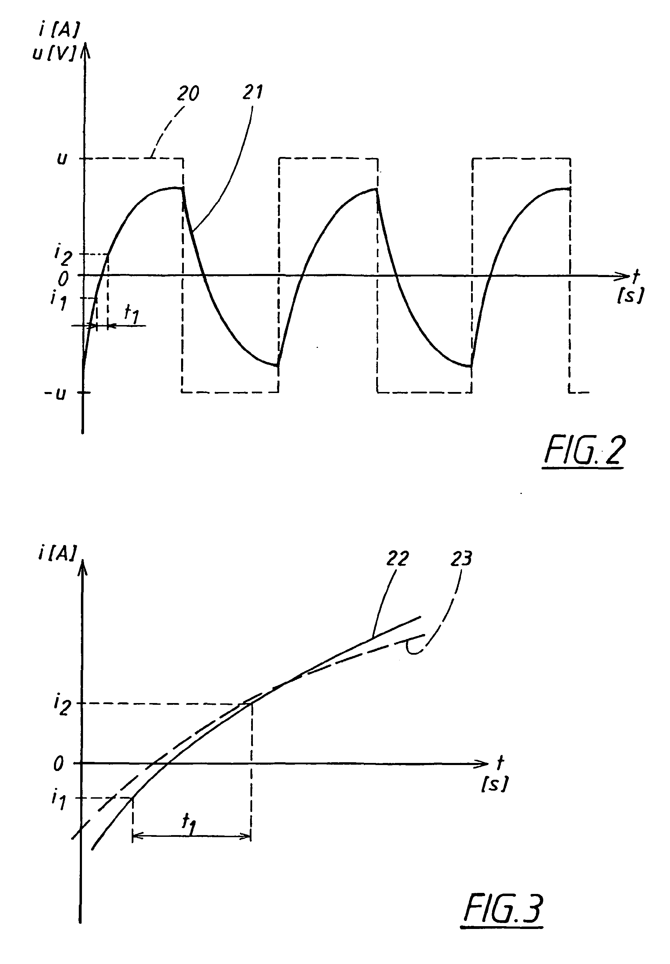

In Fig. 2, the function of the position sensor 1 is illustrated by means of current and voltage diagrams. The above-mentioned square wave voltage delivered by the first operational amplifier is illustrated by a dashed line 20. According to the embodiment, the square wave voltage is selected to be symmetrical about 0 V and to vary between two values, U and -U, respectively. The current $i$ through the coil 5 is illustrated by a continuous line 21. When the square wave voltage changes polarity, the time derivative of the current $i$ will change sign, and the current will change at a certain rate, depending on the inductance. The inductance, in turn, will depend on how far into the coil 5 the core 4 has been inserted. The inductance of the coil 5, and thereby the position of the element 9, can be determined by the computer unit 11 (see Fig. 1) measuring the period of time $t_1$ needed for the current $i$ to change from a first value $i_1$ to a second value $i_2$.

As the core is magnetised by means of a symmetrical alternating voltage (e.g. a square wave voltage) across the coil, a symmetrical magnetising curve / hysteresis curve is obtained (the magnetic field B as a function of $N \times i$, where N is the number of turns of the coil). The inclination of this curve determines the instantaneous inductance of the coil (at each point of the curve). The magnetising curve exhibits the advantageous characteristic of the instantaneous inductance being relatively uninfluenced by the temperature, where the current $i$ is close to zero. Furthermore, the influence from the coil resistance (and thereby its temperature dependence) will be small, as the current through it is small.

In order to obtain accurate measurements, the measuring time $t_1$ should be as long as possible, and, consequently, the two current levels $i_1$, $i_2$, are selected as far apart as possible. The optimum current level values will have to be tried out from case to case, and are usually not located symmetrically about zero.

The magnetic properties of the magnetic core are nonlinear and temperature-dependent. When a magnetising curve is run through, energy is needed, which can be seen partly as a loss resistance connected in series with the coil resistance. Together with the temperature dependence of the coil resistance, the total temperature dependence will become complex, particularly if the core and the coil will receive different temperatures, e.g. during transients.

One particular advantage as regards the position sensor 1 is that a low temperature dependence will be obtained if the current levels $i_1$ and $i_2$ are selected closely enough to zero. This is due to a. o. the fact that the resistance of the coil 5 will not influence the time derivative of the current $i$ at a current $i$ close to zero. More particularly, this is due to the magnetic properties of the core 4, and the so-called series resistances occurring in the coil 5 and the core 4, will have little influence at low currents if, at the same time, the condition of symmetrical magnetisation is fulfilled through symmetrical voltage feeding. Thus, the current levels $i_1$ and $i_2$ are selected to lie within an interval close to zero, exhibiting a low temperature dependence.

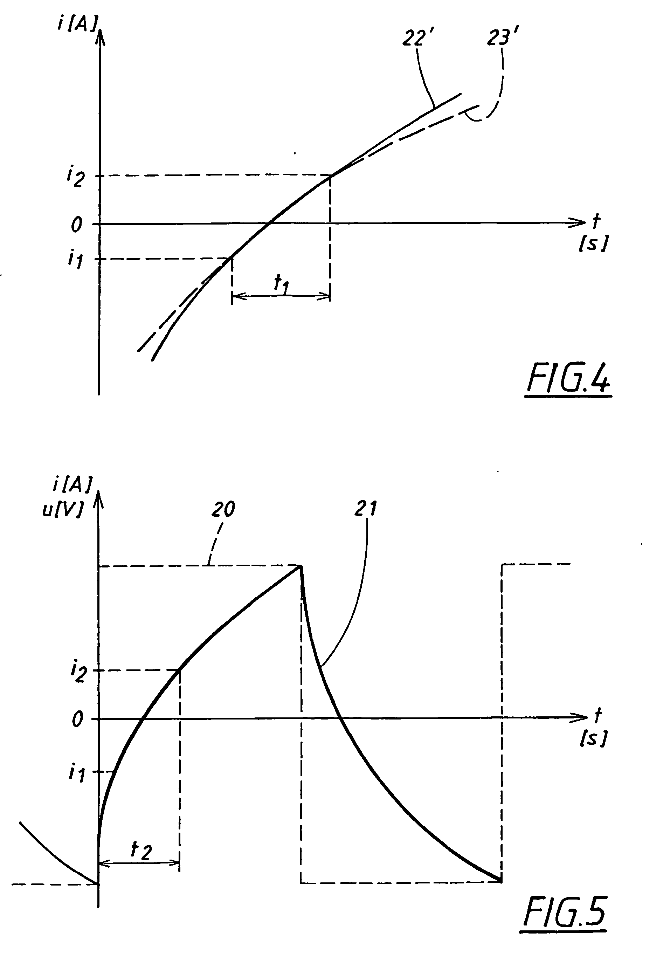

Fig. 3 shows in further detail how the current levels, $i_1$, $i_2$, can be selected. The figure is an enlarged portion of the diagram of Fig. 2 and shows two current curves that are both of the type shown in Fig. 2, but where one current curve 22 shows the current in case the position sensor is working at a relatively low temperature (e.g. 25° C) and the other current curve 23 shows the current when the position sensor has a relatively high temperature (e.g. 105° C). As a consequence of the temperature dependence described above it applies that the two curves 22, 23 will appear somewhat different.

During position detection, the computer unit 11 will measure the time $t_1$ needed for the current $i$ to pass from the first current value $i_1$ to the second current value $i_2$. In Fig. 3, that period of time $t_1$ is indicated, which will pass while the current curve 22 (corresponding to a relatively low temperature) runs between the two levels $i_1$, $i_2$.

According to an embodiment, described with reference to Fig. 5, the length of a period of time $t_2$ passing from when the square wave voltage switches over and changes polarity until one of the current levels is reached, can be utilised as a measurement of the temperature. If required, a further refined temperature compensation can therefore be performed in addition to what has been described above, more particularly through an additional calculated compensation. Furthermore, this alternative embodiment of the position sensor can be utilised for obtaining a measurement of the temperature in the area surrounding the position sensor.

It is a basic principle of the present invention to utilise the per se known position sensor for measurement of temperature. In accordance with the invention, a measurement regarding the position of the position sensor, i.e. corresponding to the measured period of time $t_1$ needed for the current $i$ to rise from a first level $i_1$ to a second level $i_2$, can be utilised together with a measurement of $t_2$ for obtaining a temperature value regarding the ambient temperature of the gearbox. This is based on the fact that the period of time $t_2$ is a function of the electrical time constant of the sensor, which in turn is dependent on its inductance L and resistance R. Essentially, L is dependent on the position of the sensor, while the resistance R is dependent on the temperature T of the sensor. This means that:

$$t_2 = function_1(L(x), R(T))$$

which means that:

$$t_2 = function_2(t_1, T)$$

which means that:

$$T = function_3(t_1, t_2)$$

Thus, the period of time $t_2$ will vary with the temperature and with the position of the sensor. This means that a value regarding the position x of the sensor (i.e. corresponding to $t_1$) is taken out first, whereupon a measurement of the ambient temperature T can be calculated from $t_2$. In this case, the period of time $t_2$ corresponds to the period of time passing from when the current $i$ through the coil 5 increases from a first predetermined value (e.g. $i_1$) to a second predetermined value (e.g. $i_2$). In this case, the period of time $t_2$ corresponds to the period of time passing from when the above-mentioned square wave voltage switches over and changes polarity until the current level $i_2$ is reached.

If a system with for example four position sensors is utilised in a gearbox, in accordance with what has been mentioned above, a measurement of the ambient .temperature of the gearbox can be obtained. More precisely, this can be provided by means of a suitable weighing of the temperature values from the respective sensor, e.g. by calculating an average of the temperature values from the respective sensor or by weighing weighted values from the respective sensor.

The position sensor described above can also be utilised in connection with a diagnosis method, wherein a diagnosis of a system consisting of more than one position sensor of the above-mentioned type can be accomplished by comparing measurement values regarding the respective position sensor. In a system with for example four position sensors (in accordance with what has been mentioned above), the invention can be implemented by means of the computer unit 11 being adapted for controlling whether a predetermined measurement signal from a given position sensor deviates from a corresponding measurement signal from the other position sensors in the system. In this case, a measured value regarding the temperature of a certain sensor can for example be compared with the values regarding the temperature from the other sensors. If the temperature value from the sensor which is controlled deviates more than a certain permissible limit value from the other sensors, it can be established that an error is evident in the sensor which is controlled. Alternatively, the temperature value from the sensor which is controlled can be compared with a certain weighted value from all the other sensors, e.g. the average of the temperature values from the other sensors. In this case, the computer unit 11 can be adapted for emitting some sort of alarm signal which informs a user of the fact that a position sensor needs to be exchanged or repaired.

Alternatively, the diagnosis can consist of a control of whether the relation between the measured periods of time $t_1$ and $t_2$ of a first position sensor deviates from corresponding relation between these periods of time of the other position sensors in the system. If the difference between the relation between $t_1$ and $t_2$ of the first position sensor deviates more than a certain limit value from corresponding relation of each one of the other position sensors, the computer unit 11 can establish that an error probably is evident in the first position sensor. As an alternative to this method, the computer unit 11 can be adapted to control whether the relation between $t_1$ and $t_2$ of the first position sensor deviates more than a certain maximum value from the average of the corresponding relations between $t_1$ and $t_2$ of the other position sensors. In this case, this too can be said to correspond to a situation where the first position sensor is incorrect. Thus, this alternative diagnosis method can be said to correspond to that the function "$function_3(t_1, t_2)$", according to what has been mentioned above, is replaced by an alternative function "$function_4(t_1, t_2)$". Thus, the diagnosis method according to the invention is not limited to any specific function, by means of which the respective sensor is controlled.

A diagnosis method can also be realised by means of the fact that only the period of time $t_1$ (which indicates a measurement of the position of the respective sensor) for a certain sensor is compared with a correspondingly measured period of time for another sensor (or for all the other sensors in a system with several sensors). If the deviation between the period of time $t_1$ of the sensor which is controlled, compared with a corresponding measurement of any other sensor (or for example an average of corresponding measurements from all the other sensors), is larger than a certain expected value, it can be assumed that the sensor which is controlled is defect.

Thus, the above-mentioned diagnosis method utilises a measurement of a period of time passing from when the square wave voltage changes polarity until the current reaches a certain level, wherein the current level can be the above-mentioned first level $i_1$ or the above-mentioned second level $i_2$, or any other suitable current level during the magnetisation course for the core 4 of the coil.

When a certain given position sensor has been controlled in any of the above-mentioned manners, the computer unit 11 will move on and control the other position sensors in proper order. Suitably, this diagnosis method is repeated continuously during operation of the gearbox, so that all the sensors are controlled in accordance with a periodic course of events. However, it shall be noted that the principle according to the invention regarding the above-mentioned measurement of temperature is not dependent on any diagnosis method being carried out.

One particular advantage as regards the measurement of temperature, if it is used in connection with gearboxes, is that existing temperature sensors, which are of frequent occurrence, can be eliminated. This results in cost savings and a simplified manufacture of the gearbox in question.

The function according to the invention can be further refined by means of the fact that the measurement of temperature for the respective position sensor can be used for calculating the mean value of the results from a large number of measurements of the time $t_1$. This is enabled by the square wave voltage having a relatively high frequency, in the order of 250 Hz. For this purpose, the computer unit 11 is operable to determine a mean value of for example 10 or 50 measurements of the current position of the element 9. The advantage of this method is that any influence from occasional deviations of the position of the element 9, for example caused by vibrations or transient movements, can be eliminated.

The invention will not be limited to what has been described above, but various embodiments are conceivable within the scope of the claims. For example, the measurement of temperature according to the invention is suitable for use in many different applications, e.g. components in a vehicle drive line or other industrial products.

Furthermore, in accordance with what has been described above, the measurement of temperature can be carried out without any form of diagnosis (for example according to the above-mentioned diagnosis method) being carried out.

Furthermore, square wave voltages with various frequencies and "duty cycles" may be used. For example, the invention is not limited to using a supply voltage with a time-symmetrical square wave shape, but other waveforms are also conceivable.

## Claims

1. A method for measurement of temperature with detector (1) which is of the inductive type and comprises a coil (5) and a core (4) movable within the coil, the position of said core in relation to the coil (5) being dependent on the position of said element (9), wherein the method comprises:

   connecting a regularly alternating voltage to said coil (5), and
   measuring the current ($i$) flowing through the coil,

   **characterised by** comprising:

   measuring a first period of time ($t_1$) needed for said current ($i$) to change from a first predetermined level ($i_1$) to a second predetermined level ($i_2$);
   measuring a second period of time ($t_2$) passing from when said voltage changes polarity until said current ($i$) reaches said second predetermined level ($i_2$); and
   deriving a measurement of the temperature (T) in connection with the detector (1) on the basis of the measurements of said first period of time ($t_1$) and said second period of time ($t_2$).

2. The method according to claim 1,
   **characterised by** comprising determining a measurement of the core (4) position through measuring said period of time ($t_1$).

3. The method according to any of the preceding claims,
   **characterised by** comprising diagnosing said detector (1) through comparison between values based on said measured periods of time ($t_1$; $t_2$) in relation to an expected limit value, and determining whether any errors are evident in said sensor (1) through said comparison.

4. The method according to claim 3, comprising detection with several sensors (1), **characterised by** said comparison relating to values regarding said measured periods of time ($t_1$; $t_2$) of a first sensor (1) and corresponding values of other sensors.

5. The method according to any one of the preceding claims, **characterised by** said levels ($i_1$, $i_2$) being selected within such an interval that the measurement of said time ($t_1$) will result in minimum temperature dependence.

6. The method according to claim 5, **characterised by** said levels ($i_1$, $i_2$) being selected close to zero.

7. The method according to any one of the preceding claims, **characterised by** said alternating voltage being a square wave voltage.

8. The method according to claim 7, **characterised by** said square wave voltage being selected symmetrically so as to alternate between two voltage levels lying symmetrically about 0 V.

9. The method according to any one of the preceding claims, **characterised by** said square wave voltage having a frequency between 2 Hz and 2 kHz.

10. The method according to any one of the preceding claims, **characterised by** utilising a large number of measurements of said time ($t_1$) for determining a mean value of said time ($t_1$).

11. A device for measurement of temperature with detector (1) which is of the inductive type and comprises a coil (5) and a core (4) movable within the coil, the position of said core in relation to the coil (5) being dependent on the position of said element (9), wherein the device comprises:

an amplifier means (12) for connecting a regularly alternating voltage to said coil (5), and
a measuring device (6) for measuring the current ($i$) flowing through the coil (5),

**characterised by**

the measuring device (6) being intended for measuring a first period of time ($t_1$) needed for said current ($i$) to change from a first predetermined level ($i_1$) to a second predetermined level ($i_2$);
the measuring device (6) being intended for measuring a second period of time ($t_2$) passing from when said voltage changes polarity until said current ($i$) reaches said second predetermined level ($i_2$); and
said measuring device (6) being intended for deriving a measurement of the temperature (T) in connection with the detector (1) on the basis of the measurements of said first period of time ($t_1$) and said second period of time ($t_2$).

**Patentansprüche**

1. Verfahren zum Messen einer Temperatur mit einem Abtaster (1), welcher als ein induktiver Typ ausgebildet ist und eine Spule (5) und einen innerhalb der Spule bewegbaren Kern (4) aufweist, wobei die Position des Kerns in Bezug auf die Spule (5) von der Position des Elementes (9) abhängig ist, wobei das Verfahren folgende Verfahrensschritte aufweist:

Verbinden der Spule (5) mit einer regulären bzw. stetigen Wechselspannung; und
Messen des durch die Spule fließenden Stroms ($i$),

**dadurch gekennzeichnet, dass** es folgende Verfahrensschritte aufweist:

Messen eines ersten Zeitabschnitts ($t_1$), welchen der Strom ($i$) benötigt, um sich von einem ersten vorher festgelegten Pegel ($i_1$) auf einen zweiten vorher festgelegten Pegel ($i_2$) zu ändern;
Messen eines zweiten Zeitabschnitts ($t_2$), welcher von dem Zeitpunkt an vergeht, wenn die Spannung ihre Polarität wechselt, bis dass der Strom ($i$) den zweiten vorher festgelegten Pegel ($i_2$) erreicht hat; und

Ableiten einer Messung der Temperatur (T) in Verbindung mit dem Abtaster (1) auf der Grundlage des Messens des ersten Zeitabschnitts ($t_1$) und des zweiten Zeitabschnitts ($t_2$).

2. Verfahren nach Anspruch 1, **dadurch gekennzeichnet, dass** es ein Ermitteln einer Messung der Position des Kerns (4) durch Messen des Zeitabschnitts ($t_1$) aufweist.

3. Verfahren nach einem der vorhergehenden Ansprüche, **dadurch gekennzeichnet, dass** es ein Diagnostizieren bzw. Beurteilen des Abtasters (1) durch Vergleichen zwischen Werten, welche auf den gemessenen Zeitabschnitten ($t_1$; $t_2$) in Bezug auf einen erwarteten Grenzwert basieren, und ein Ermitteln durch das Vergleichen aufweist, ob irgendwelche Fehler in dem Sensor (1) vorhanden sind.

4. Verfahren nach Anspruch 3, welches ein Abtasten mit verschiedenen Sensoren (1) aufweist, **dadurch gekennzeichnet, dass** sich das Vergleichen auf Werte bezieht, welche die gemessenen Zeitabschnitte ($t_1$; $t_2$) eines ersten Sensors (1) und korrespondierende Werte von weiteren Sensoren betreffen.

5. Verfahren nach einem der vorhergehenden Ansprüche, **dadurch gekennzeichnet, dass** die Pegel ($i_1$, $i_2$) innerhalb eines solchen Intervalls ausgewählt werden, dass das Messen der Zeit ($t_1$) eine minimale Temperaturabhängigkeit ergibt.

6. Verfahren nach Anspruch 5, **dadurch gekennzeichnet, dass** die Pegel ($i_1$, $i_2$) in der Nähe von Null ausgewählt werden.

7. Verfahren nach einem der vorhergehenden Ansprüche, **dadurch gekennzeichnet, dass** die Wechselspannung eine Rechteckspannung ist.

8. Verfahren nach Anspruch 7, **dadurch gekennzeichnet, dass** die Rechteckspannung so symmetrisch ausgewählt wird, dass sie zwischen zwei Spannungspegeln wechselt, welche symmetrisch zu 0 V angeordnet sind.

9. Verfahren nach einem der vorhergehenden Ansprüche, **dadurch gekennzeichnet, dass** die Rechteckspannung eine Frequenz zwischen 2 Hz und 2 kHz aufweist.

10. Verfahren nach einem der vorhergehenden Ansprüche, **dadurch gekennzeichnet, dass** eine große Anzahl von Messungen der Zeit ($t_1$) zum Ermitteln eines Mittelswerts der Zeit ($t_1$) verwendet wird.

11. Vorrichtung zur Messung einer Temperatur mit einem Abtaster (1), welcher als ein induktiver Typ ausgebildet ist und eine Spule (5) und einen innerhalb der Spule bewegbaren Kern (4) aufweist, wobei die Position des Kerns in Bezug auf die Spule (5) von der Position des Elementes (9) abhängig ist, wobei die Vorrichtung Folgendes aufweist:

eine Verstärkereinrichtung (12) zur Verbindung der Spule (5) mit einer regulären bzw. stetigen Wechselspannung; und
eine Messeinrichtung (6) zur Messung des durch die Spule (5) fließenden Stroms ($i$),

**dadurch gekennzeichnet, dass**

die Messeinrichtung (6) zur Messung eines ersten Zeitabschnitts ($t_1$) vorgesehen ist, welchen der Strom ($i$) benötigt, um sich von einem ersten vorher festgelegten Pegel ($i_1$) auf einen zweiten vorher festgelegten Pegel ($i_2$) zu ändern;
die Messeinrichtung (6) zur Messung eines zweiten Zeitabschnitts ($t_2$) vorgesehen ist, welcher von dem Zeitpunkt an vergeht, wenn die Spannung ihre Polarität wechselt, bis dass der Strom ($i$) den zweiten vorher festgelegten Pegel ($i_2$) erreicht hat; und
die Messeinrichtung (6) zur Ableitung einer Messung der Temperatur (T) in Verbindung mit dem Abtaster (1) auf der Grundlage der Messungen des ersten Zeitabschnitts ($t_1$) und des zweiten Zeitabschnitts ($t_2$) vorgesehen ist.

**Revendications**

1. Procédé de mesure d'une température à l'aide d'un détecteur

(1) qui est du type inductif et comporte une bobine (5) et un noyau (4) mobile dans la bobine, la position dudit noyau par rapport à la bobine (5) étant fonction de la position dudit élément (9), dans lequel le procédé comporte :

la connexion d'une tension alternative régulière à ladite bobine (5), et
la mesure du courant (i) circulant à travers la bobine,

**caractérisé en ce qu'**il comporte :

la mesure d'une première période de temps ($t_1$) nécessaire pour que ledit courant (i) change d'un premier niveau prédéterminé ($i_1$) en un second niveau prédéterminé ($i_2$),
la mesure d'une seconde période de temps ($t_2$) s'écoulant depuis le moment où ladite tension change de polarité jusqu'à ce que ledit courant (i) atteigne ledit second niveau prédéterminé ($i_2$), et
la dérive d'une mesure de la température (T) en association avec le détecteur (1) sur la base des mesures de ladite première période de temps ($t_1$) et de ladite seconde période de temps ($t_2$).

2. Procédé selon la revendication 1,
**caractérisé en ce qu'**il comporte la détermination d'une mesure de la position de noyau (4) par mesure de ladite période de temps ($t_1$).

3. Procédé selon l'une quelconque des revendications précédentes, **caractérisé en ce qu'**il comporte le diagnostic dudit détecteur (1) par comparaison entre les valeurs basées sur lesdites périodes de temps mesurées ($t_1$ ; $t_2$) en référence à une valeur limite attendue, et la détermination du fait que de quelconques erreurs sont évidentes dans ledit détecteur (1) par l'intermédiaire de ladite comparaison.

4. Procédé selon la revendication 3, comportant la détection à l'aide de plusieurs détecteurs (1),
**caractérisé par** ladite comparaison concernant des valeurs desdites périodes de temps mesurées ($t_1$ ; $t_2$) d'un premier détecteur (1) et des valeurs correspondantes d'autres détecteurs.

5. Procédé selon l'une quelconque des revendications précédentes,
**caractérisé en ce que** lesdits niveaux ($i_1$, $i_2$) sont sélectionnés dans un intervalle tel que la mesure de ladite période de temps ($t_1$) va avoir pour résultat une dépendance de température minimum.

6. Procédé selon la revendication 5,
**caractérisé en ce que** lesdits niveaux ($i_1$, $i_2$) sont sélectionnés en étant proches de zéro.

7. Procédé selon l'une quelconque des revendications précédentes,
**caractérisé en ce que** ladite tension alternative est une tension en ondes carrées.

8. Procédé selon la revendication 7,
**caractérisé en ce que** ladite tension en ondes carrées est sélectionnée de manière symétrique de manière à alterner entre deux niveaux de tension se trouvant symétriquement autour de 0 V.

9. Procédé selon l'une quelconque des revendications précédentes,
**caractérisé en ce que** ladite tension en ondes carrées a une fréquence comprise entre 2 Hz et 2 kHz.

10. Procédé selon l'une quelconque des revendications précédentes,
**caractérisé en ce que** l'on utilise un grand nombre de mesures dudit temps ($t_1$) pour déterminer une valeur moyenne dudit temps ($t_1$).

11. Dispositif de mesure d'une température à l'aide d'un détecteur (1) qui est du type inductif et comporte une bobine (5) et un noyau (4) mobile dans la bobine, la position dudit noyau par rapport à ladite bobine (5) étant fonction de la position dudit élément (9), dans lequel le dispositif comporte :

des moyens amplificateurs (12) pour connecter une tension alternative régulièrement à ladite bobine (5), et
un dispositif de mesure (6) pour mesurer le courant (i) circulant à travers la bobine (5),

**caractérisé en ce que**

le dispositif de mesure (6) est destiné à une mesure d'une première période de temps ($t_1$) nécessaire pour que ledit courant (i) change d'un premier niveau prédéterminé ($i_1$) en un second niveau prédéterminé ($i_2$),
le dispositif de mesure (6) étant destiné à mesurer une seconde période temps ($t_2$) s'écoulant lorsque ladite tension change de polarité jusqu'à ce que ledit courant (i) atteigne ledit second niveau prédéterminé ($i_2$), et ledit dispositif de mesure (6) étant destiné à dériver une mesure de la température (T) en référence au détecteur (1) sur la base des mesures de ladite première de temps ($t_1$) et de ladite seconde période de temps ($t_2$).

*FIG. 1*

_FIG.2_

_FIG.3_

*FIG.4*

*FIG.5*